# EUROPÄISCHE PATENTSCHRIFT

(11) **EP 4 284 623 B1**
(45) Veröffentlichungstag und Bekanntmachung des Hinweises auf die Patenterteilung: **20.11.2024**
(21) Anmeldenummer: 22702724.0
(22) Anmeldetag: 31.01.2022
(51) Int. Cl.: B29C 51/30, B29C 33/30, C03B 23/02, B21D 22/20, B29C 51/08, C03B 23/03

(54) **FORM ZUM FLEXIBLEN AUSBILDEN EINER FORMOBERFLÄCHE**
MOULD FOR FLEXIBLY FORMING A MOULD SURFACE
MOULE POUR FORMER DE MANIÈRE FLEXIBLE UNE SURFACE DE MOULE

(30) Priorität: 01.02.2021 DE 102021102285
(43) Veröffentlichungstag der Anmeldung: 06.12.2023
(73) Patentinhaber: Hamoud, Mohamed, 30451 Hannover (DE)
(72) Erfinder: Hamoud, Mohamed, 30451 Hannover (DE)
(74) Vertreter: Holz, Christian
(86) Internationale Anmeldenummer: PCT/EP2022/052166
(87) Internationale Veröffentlichungsnummer: WO 2022/162207

(56) Entgegenhaltungen:
- CN-A- 103 752 691
- US-A- 5 796 620
- US-A1- 2003 130 818

## Beschreibung

Die vorliegende Erfindung betrifft eine Form zum flexiblen Ausbilden einer Formoberfläche.

In der Fertigungstechnik sind verschiedene Fertigungsverfahren bekannt, welche zur Herstellung von Werkstücken, d.h. von geometrisch bestimmten festen Körpern, verwendet werden können. Diese Werkstücke können Zwischenprodukte, auch Halbzeuge genannt, oder Endprodukte sein.

Zu den Fertigungsverfahren gehört das Umformen als Verfahren der bildsamen Formgebung. Beim Umformen werden Rohteile aus plastischen Werkstoffen wie beispielsweise aus Metallen oder aus thermoplastischen Kunststoffen gezielt in eine andere Form gebracht, ohne dabei Material von den Rohteilen zu entfernen wie beim Trennen oder hinzuzugeben wie beim Fügen.

Beim Umformen, aber auch bei anderen Fertigungsverfahren, werden Werkzeuge als Formen verwendet, in welche bzw. zwischen welchen die Rohteile eingelegt und dann umgeformt werden. Dies kann mittels verschiedener Arten von Pressen erfolgen. Beispielsweise kann beim Tiefziehen als Zugdruckumformen ein Blechzuschnitt in einen einseitig offenen Hohlkörper einer Tiefziehpresse eingelegt und von oben mit einem Prägestempel in den Hohlkörper eingedrückt und hierdurch umgeformt werden. Sowohl der einseitig offene Hohlkörper als auch der Prägestempel, welche hinsichtlich ihrer Kontur zueinander passen und dem herzustellenden Werkstück entsprechen, können als Tiefziehformen bzw. als Tiefziehwerkzeuge bezeichnet werden.

Formen als Werkzeuge werden auch bei anderen Umformverfahren verwendet. Beispielsweise werden beim Thermoformen, auch Warmformen genannt, thermoplastischer Kunststoffe unter Wärmeeinwirkung sowie mit Hilfe von Druckluft oder Vakuum vergleichbar dem Tiefziehen zwischen einem unteren Werkzeug und einem oberen Werkzeug umgeformt.

Auch bei anderen Fertigungsverfahren werden Formen als Werkzeuge verwendet. Beispielsweise beim Fügen, bei dem zwei oder mehr feste Körper als Fügeteile mit geometrisch bestimmter Gestalt dauerhaft verbunden werden, können Formen verwendet werden, um innerhalb der Form die Körper anzuordnen und zu verbinden.

Nachteilig ist bei der Verwendung von Formen als Werkzeuge, dass diese für jedes Werkstück gezielt hergestellt werden müssen. Dies gilt auch bei geringen Änderungen des Werkstücks, da auch in diesem Fall üblicherweise ein vollkommen neues Werkzeug erstellt werden muss. Die Herstellung der Form als Werkzeug kann durch Fräsen der üblicherweise aus Metall bestehenden Werkzeuge erfolgen, ggfs. auch durch 3D-Druck oder durch Spritzguss.

In jedem Fall führt dies bei der Herstellung der Werkstücke zu entsprechend hohen Anschaffungskosten der Werkzeuge sowie Maschinenstundenkosten, welche sich üblicherweise nur bei einer Massenproduktion rentieren, da in diesem Fall die Form als Werkzeug mehrfach bzw. zigfach verwendet werden kann, so dass die Anschaffungskosten des Werkzeugs und die Maschinenkosten auf alle hiermit hergestellten Werkstücke verteilt anfallen. Diese hohen Kosten sind durch den Material- und Herstellungsaufwand der Werkzeuge begründet. Hierzu werden auch entsprechende Maschinen wie mehrdimensionale Fräsmaschinen benötigt, welche qualifiziert bedient bzw. programmiert werden müssen und dessen Fräswerkzeuge verschleißen. Dies gilt vergleichbar für den 3D-Druck, welcher ebenfalls Material benötigt und dessen 3D-Drucker-Düsen ebenfalls verschließen können.

Dennoch kann die Verwendung von metallischen Formen als Werkzeuge vorteilhaft sein, da diese vergleichsweise haltbar und langlebig sein können, d.h. zur Herstellung sehr vieler Werkstücke verwendet werden können, wenngleich deren Herstellung durch Fräsen vergleichsweise hohe Kosten verursachen kann.

Nachteilig ist bei derartigen Formen als Werkzeuge auch, dass diese gelagert werden müssen, um sie später erneut verwenden zu können. Dies kann einen nicht unerheblichen Platzbedarf verursachen.

Daher ist es bekannt, Formen als Werkzeuge mittels einer Matrix aus Stiften oder dergleichen zu bilden, wobei die Stifte parallel zueinander entlang ihrer länglichen Erstreckungsrichtung unterschiedlich positioniert werden können, um mittels ihrer Enden bzw. Spitzen gemeinsam eine dreidimensionale Oberfläche bzw. Kontur zu bilden, welche dann die Form als Werkzeug darstellt. Die Stifte können in ihrer Position gehalten werden.

So beschreibt die DE 10 2018 107 391 A1 ein Säulensystem bzw. ein Aufnahmesystem mit einer matrixförmigen Anordnung von Säulen, deren Außenseiten Funktionsflächen bilden und deren Längsachsen parallel zueinander verlaufen, wobei die Säulen entlang ihrer Längsachsen verschiebbar und direkt gegeneinander gelagert sind, und mit Kraftbeaufschlagungsmitteln, mittels derer die einzelnen Spalten und bzw. oder Zeilen der matrixförmigen Anordnung von Säulen mit senkrecht zu den Längsachsen der Säulen wirkenden Kräften beaufschlagbar sind, wobei durch eine logische Abfolge der Kraftbeaufschlagungen für Zeilen und bzw. oder Spalten die Säulen einzeln in ihren Sollpositionen in Z-Richtung einstellbar und abschließend in ihren Sollpositionen in X-Y-Z-Richtung fixierbar sind.

Die EP 3 444 092 A1 beschreibt eine Form zum Formen eines geformten Bauteils umfassend: ein erstes Formteil und ein zweites Formteil, wobei das erste und das zweite Formteil so konfiguriert sind, dass sie zusammen einen Formhohlraum bilden, und wobei das erste und das zweite Formteil entlang einer ersten Achse relativ zueinander beweglich sind, um die Form zu schließen oder zu öffnen, wobei zumindest das erste Formteil eine Anordnung aus einer Vielzahl von Formelementen umfasst, wobei die Vielzahl von Formelementen erste Endabschnitte aufweist, die so konfiguriert sind, dass sie zusammen eine Formoberfläche bilden, die zumindest einen Teil einer Oberfläche des Formhohlraums bildet, und wobei die Vielzahl von Formelementen relativ zueinander entlang der ersten Achse beweglich sind, um eine gewünschte Topographie der Formoberfläche zu bilden.

In der gewünschte Topographie der Formoberfläche können die Formelemente verriegelt werden, indem die Anordnung der Vielzahl von Formelementen mit einem äußeren Rahmen versehen wird, der so angeordnet ist, dass er selektiv Druck auf die Vielzahl von Formelementen entlang einer Achse quer zur ersten Achse ausübt. Der äußere Rahmen kann die Anordnung der Vielzahl von Formelementen zumindest teilweise umschließen. Alternativ können Formelemente in der verriegelten Position auch gegen einen Widerstand entlang der ersten Achse beweglich sein. Der Widerstand gegen die Bewegung kann durch Reibungskräfte verursacht werden, die durch den Kontakt zwischen den einzelnen Formelementen entstehen. Typischerweise ist der Bewegungswiderstand so ausgelegt, dass er eine Bewegung der Vielzahl von Formelementen entlang der ersten Achse unter den Betriebsbedingungen eines Formverfahrens verhindert. Das heißt, dass die Formelemente für die Zwecke der Formgebung als unbeweglich betrachtet werden.

Die US 2018/015524 A1 beschreibt ein Verfahren und eine Vorrichtung zur passiven Positionierung von Stiften eines rekonfigurierbaren Formwerkzeugs. Die Vorrichtung kann eine Vielzahl von Stiften umfassen, die in einem Rahmen angeordnet sind, sowie einen Bolzen, der, wenn er angezogen ist, die Stifte in ihrer Position sichern oder verriegeln kann. Wenn der Bolzen gelöst wird, kann die Position der Stifte eingestellt werden. Ein vorläufiges Modell einer konturierten Oberfläche, die einem Gegenstand durch das rekonfigurierbare Formwerkzeug verliehen werden soll, kann dazu verwendet werden, eine Formoberfläche des rekonfigurierbaren Formwerkzeugs zu definieren.

Nachteilig bei derartigen Verfahren und Vorrichtungen ist, dass die Säulen, Formelemente bzw. Stifte lediglich dadurch in einer Positionierung einer gewünschten Topographie der gemeinsamen Oberflächen gehalten werden können, indem sie quer zu ihrer Bewegungsrichtung verspannt werden. Somit werden Querkräfte auf die Säulen, Formelemente bzw. Stifte ausgeübt, um diese kraftschlüssig über die Reibung untereinander zu verspannen bzw. zu verklemmen. Die untereinander wirkende Reibkräfte sind jedoch begrenzt, so dass die Positionierung der einzelnen Säulen, Formelemente bzw. Stifte zur Ausbildung der gewünschten Topographie der gemeinsamen Oberflächen nur bei vergleichsweise geringen Kräften des Fertigungsverfahren in der Richtung der länglichen Erstreckung der Säulen, Formelemente bzw. Stifte sicher eingehalten werden kann. Werden zu hohe Kräfte auf die Säulen, Formelemente bzw. Stifte ausgeübt, so kann deren Positionierung verändert werden, was sich im hergestellten Werkstück widerspiegelt und dieses unbrauchbar machen kann. Dabei können insbesondere Fertigungs- und Montagetoleranzen der Säulen, Formelemente bzw. Stifte dazu führen, da zwischen einzelnen Säulen, Formelemente bzw. Stifte vergleichsweise geringe Reibkräfte auftreten können, was die Kräfte des Fertigungsverfahrens weiter reduzieren kann, bis zu welchen das Verfahren bzw. die Vorrichtung verwendet werden kann.

Die DE 203 20 712 U1 beschreibt ein Werkzeug, das an die Oberflächenkonturen eines gewünschten Bauteils angepasst werden kann, indem eine Matrix aus einzelnen Segmentstempeln eingestellt wird. Alle Stempel sind identisch und haben einen quadratischen Grundquerschnitt mit Seitenlänge. Die Einstellung der einzelnen Stempel auf ein gewünschtes Profil in Höhenrichtung erfolgt durch einen Einstellstempel, der durch ein Steuerorgan, das Teil eines Mehrachsentisches ist, in drei Achsen bewegt wird. Die Stempel können in ihrer eingestellten Position durch Klemmblöcke und Klemmschlitten arretiert werden, die durch Steuerelemente betätigt werden. Durch Auflegen einer elastischen Folie auf die Oberseite der Matrize kann eine hohe Oberflächengüte erzielt werden. Alle Stempel befinden sich in einem Kasten, der ein Gitter aufweist, durch das die zylindrischen unteren Schäfte der Stempel axial geführt werden. Das Gitter begrenzt auch die maximale Bewegung der Stempel.

Nachteilig ist auch bei diesem Werkzeug, dass die gewünschte Positionierung der Segmentstempel durch Klemmkräfte in Querrichtung erreicht wird, was die aufnehmbaren Prozesskräfte des Fertigungsverfahrens begrenzt, wie bereits zuvor beschrieben.

Die WO 2008/004858 A1 beschreibt eine diskrete Matrize zur Bildung einer dreidimensional gekrümmten Fläche, umfassend einen Rahmen, parallele, in parallelen Reihen angeordnete, in ihrer Längsrichtung relativ zum Rahmen einzeln bewegliche Stifte, deren vordere Enden die dreidimensional gekrümmte Fläche definieren, zumindest im wesentlichen plattenförmige Trennelemente zwischen den Reihen, sowie Druckelemente zum Zusammendrücken der Stiftreihen mit den dazwischenliegenden Trennelementen unter Abdrücken gegen den Rahmen in radialer Richtung der Stifte, wobei zumindest die sich parallel zur Längsrichtung erstreckende Oberfläche zumindest einiger der plattenförmigen Trennelemente in Längsrichtung der Reihen gewellt ist, zumindest während der Verwendung der diskreten Form zur Herstellung eines Produkts.

Hierdurch können die Reibkräfte zwischen den einzelnen Stiften erhöht sowie toleranzbedingte Maßabweichungen der Stifte ausgeglichen werden. Dennoch bleiben die Kräfte begrenzt, welche in der Richtung der länglichen Erstreckung der Stifte vom Fertigungsverfahren auf die gemeinsame Oberfläche der Stifte ausgeübt werden können, ohne die gewünschte Topographie der gemeinsamen Oberflächen zu verändern.

Die US 5,796,620 A beschreibt eine Universalform, bestehend aus: einem Rahmen mit einer Platte, die sich in einer x-y-Ebene erstreckt, wobei die Platte eine Vielzahl von ersten konfigurierten Öffnungen aufweist, die sich durch sie hindurch erstrecken, wobei jede Öffnung im Allgemeinen eine elliptische Konfiguration mit einem kleineren und einem größeren Durchmesser aufweist; eine Vielzahl von Stäben, wobei jeder Stab einen sich in Längsrichtung erstreckenden Schaftabschnitt, einen oberen Endabschnitt mit einer oberen Endfläche zum Bilden eines Abschnitts der Formoberfläche und einen unteren Endabschnitt zum Greifen und Positionieren des Stabs aufweist, wobei sich der Schaftabschnitt jedes Stabs durch eine der Öffnungen der Platte erstreckt und eine ovale Konfiguration mit einem kleineren Durchmesser, der kleiner als der kleinere Durchmesser der Öffnung ist, und einem größeren Durchmesser, der kleiner als der größere Durchmesser der Öffnung, aber länger als der kleinere Durchmesser der Öffnung ist, aufweist; und einer servobetätigten, computergesteuerten Antriebseinrichtung zum Erfassen des unteren Endabschnitts jeder Stange und zum Bewegen jedes Schafts in Längsrichtung relativ zu seiner Aufnahmeöffnung um eine vorbestimmte Strecke und zum anschließenden Drehen des Schaftabschnitts relativ zu seiner Aufnahmeöffnung, um jede Stange innerhalb der Platte reibschlüssig zu verriegeln.

Nachteilig bleibt auch in diesem Fall die begrenzte Kraftaufnahme der reibschlüssig gehaltenen Stangen innerhalb der Platte.

Das CN 103752691 B beschreibt eine diskrete flexible Form, wobei die obere diskrete Form mit dem oberen Schieber der Presse verbunden ist und die untere diskrete Form mit der Basis der Presse kombiniert ist. Die untere diskrete Form umfasst eine untere Formhalterung und die obere Stützplatte der unteren Formhalterung ist mit einer hydraulischen Spannhülse ausgestattet. Eine elektrische Schubstange ist unter dem Stempel installiert. Die hydraulische Spannhülse verriegelt den Stempel. Der Stempel hat eine große Tragfähigkeit und kann sowohl für die Blechumformung als auch für die Abstützung von Teilen verwendet werden.

Nachteilig an dieser diskreten flexiblen Form ist, dass diese ein entsprechendes hydraulisches System zum Klemmen des Stempels umfasst, was Aufwand und insbesondere Bauraum erfordert. Auch bleiben die Klemmkräfte in Querrichtung begrenzt, welche vom hydraulischen System ausgeübt werden. Ferner können auch in diesem Fall Fertigungstoleranzen die Wirkung der querwirkenden Klemmkräfte reduzieren.

Das US 6,209,380 B1 beschreibt eine Werkzeugvorrichtung zum dreidimensionalen Formen eines Wabenkernartikels umfassend eine Matrize mit einer Reihe von länglichen, zueinander parallelen, verschiebbaren Stiften, die jeweils ein an einem Spitzenende endendes Stiftrohr aufweisen und in einer Matrix für eine Längsbewegung zwischen einer eingezogenen und einer ausgefahrenen Position angeordnet sind. Die Formgebungsvorrichtung kann unterschiedliche Stiftantriebssysteme (Kupplung, Einzelmotor, hydraulisch, extern eingestellt und dergleichen) verwenden. Ein hydraulischer oder manueller Stempel wird dann verwendet, um die Stifte von einer oder mehreren Seiten fest zu spannen, nachdem die Stifte in Position gebracht wurden.

Nachteilig ist auch in diesem Fall die Verwendung eines hydraulischen Systems oder manueller Klemmmittel zur Ausübung von seitlichen Klemmkräften, wie zuvor beschrieben.

Die DE 10 2015 011 633 A1 beschreibt ein Verfahren zur Erzeugung von aus CAD/CAM-Software gebildeten 3D-Flächen, deren Konturen für das Pressen oder Tiefziehen von Metallen und Kunststoffen bzw. für das Schaffen von räumlichen Bildern sowie für eine räumliche Dämpfung von Kräften genutzt werden kann. Die Konturen werden durch viele kleine Stempel gebildet, deren Positionen zur Bildung der räumlichen Oberfläche bzw. zum Abfangen von Umformbeanspruchungswirkungen durch das Anlegen eines elektrisch gesteuerten Magnetfeldes unmittelbar an die beweglichen Stempel oder über die Arretierung mittels magnetorheologischer Flüssigkeit fixiert werden können. Dabei erfolgt ein Antreiben und Arretieren für den kleinen Stempel.

Nachteilig hierbei ist der vergleichsweise hohe technische Aufwand, um die Positionen der kleinen Stempel in dieser Form zu verändern und zu halten. Insbesondere stellt es einen sehr hohen Aufwand dar, dies pro Stempel jeweils einzeln auszuführen, d.h. einen Antrieb und eine Arretierung pro Stempel vorzusehen. Dies führt nicht nur zu vergleichsweise hohen Herstellungskosten einer entsprechenden Vorrichtung, auch hinsichtlich der Steuerung, sondern auch zu einem entsprechend hohen Energiebedarf im Betrieb. Ferner erfordern die Antriebe und Arretierungen pro Stempel einen entsprechenden Bauraum, welcher auch die matrixartige Anordnung der Stempel samt Antrieben und Arretierungen einschränken kann.

Die DE 698 38 588 T2 beschreibt eine Vorrichtung, die eine Mehrzahl von Modulen zum schnellen Herstellen eines Artikels mit einem dreidimensionalen Entwurf aufweist, wobei die Vorrichtung einen Rahmen aufweist, wobei die Mehrzahl von Modulen an dem Rahmen befestigt ist und jedes der Module folgende Merkmale aufweist: einer Basis, die gegen eine Bewegung an dem Rahmen gesichert ist; einer Mehrzahl von Stiften, die an der Basis befestigt sind, und wobei die Mehrzahl von Stiften relativ zu derselben beweglich ist; einer Mehrzahl von Antriebsmotoren, die zahlenmäßig der Anzahl der Mehrzahl von Stiften entsprechen; einer Einrichtung, die jeden der Mehrzahl von Stiften mit der Basis verbindet, wobei die Einrichtung jeweils unabhängig zwischen der Basis und einem entsprechenden der Stifte verbunden ist; und einer Steuereinrichtung, die jeden der Antriebsmotoren und eine Steuerung miteinander verbindet, um eine selektive Versorgung der Motoren mit Energie zu bewirken.

Nachteilig ist auch in diesem Fall, dass ein Antriebsmotor pro Stift verwendet wird, was zu hohen Anschaffungs- und Betriebskosten führen sowie einen großen Bauraum pro Stift samt Motor erfordern kann, wie bereits zuvor beschrieben.

Die WO 96/17697 A1 beschreibt eine selbsteinstellende Matrize zum Bilden einer dreidimensionalen konturierten Matrizenoberfläche, umfassend: a) eine Vielzahl von einzelnen Stifteinrichtungen, die eine Matrix von Stiftreihen und Stiftspalten definieren, wobei jede der Stifteinrichtungen unabhängig in einer ausgefahrenen und zurückgezogenen Position entlang einer einzelnen Achse bewegbar ist; (b) eine Steuereinrichtung zum Erzeugen gewünschter Positionsinformationen für jeden der mehreren einzelnen Stifte der Matrix; und (c) Antriebsmittel, die auf die von den Steuermitteln erzeugten Positionsinformationen ansprechen, um eine gleichzeitige und unabhängige axiale Bewegung jedes der Stiftmittel der Matrize entlang jeder der einzelnen Achsen zu bewirken, um die dreidimensional konturierte Formoberfläche zu bilden, wobei die Antriebseinrichtung einen Antriebsmotor für jede Reihe/Spalte der Stiftmatrix umfasst, wobei jeder Antriebsmotor eine erste Antriebswelle mit einer Vielzahl von Schneckenrädern dreht, die sich mit ihr drehen und an jeder Stiftposition beabstandet sind, um jedem in dieser Reihe/Spalte positionierten Stift eine Translationsbewegung zu verleihen.

Nachteilig bleibt der vergleichsweise hohe Aufwand von einem Antriebsmotor pro Reihe/Spalte der Stiftmatrix, wie zuvor beschrieben. Dies gilt für die entsprechenden Kosten sowie den Platzbedarf.

Die US 6,089,061 A beschreibt eine Werkzeugvorrichtung umfassend einander gegenüberliegende erste und zweite Matrizen, die einen dreidimensionalen Wabenkerngegenstand dazwischen aufnehmen können und einander gegenüberliegende, ausgerichtete Anordnungen von länglichen, zueinander parallelen Translationsstiften enthalten, die jeweils an einem Spitzenende enden und in einer Matrix für eine Längsbewegung zwischen einer eingezogenen Position und einer ausgefahrenen Position, die mit dem Gegenstand in Eingriff gebracht werden kann, angeordnet sind. Ein Steuergerät bewegt jeden der verschiebbaren Stifte einzeln in koordinierter Weise zwischen der eingefahrenen und der ausgefahrenen Position und in Eingriff mit dem Gegenstand, um ihn zu einer vorgegebenen Kontur zu formen. Jede Matrize umfasst ein Gehäuse, an dem die Translationsstifte beweglich angebracht sind, eine Vielzahl von Antriebsabgangswellen, die jeweils antriebsmäßig mit einem zugehörigen Translationsstift verbunden sind, und ein in der Basis angeordnetes Getriebe zur unabhängigen antriebsmäßig steuerbaren Verbindung jedes Translationsstifts mit einer Drehantriebsquelle sowie eine Steuerung, die jedes Getriebe zur selektiven Erregung desselben verbindet, um dadurch eine selektive Drehung von mindestens einem der Translationsstifte zu erreichen.

Nachteilig bleibt auch in diesem Fall die Verwendung von mehreren Motoren sowie jeweils einem Getriebe pro Translationsstift, wie zuvor beschrieben. Dies gilt hinsichtlich des Aufwand sowie des Platzbedarfs der Umsetzung.

Die US 2003/130818 A1 beschreibt eine dreidimensionale Oberflächenform, die aus eingegebenen numerischen Daten erzeugt wird. Die Form einer elastischen Oberfläche wird durch die Positionen einer ersten Matrix von Gedächtnisstäben bestimmt. Die Position jedes der Speicherstäbe wird durch eine flexible Folie bestimmt, die durch eine zweite Matrix von Steuerstäben konturiert wird und computergesteuert ist. Nachdem die Steuerstäbe die Konturdaten an die Speicherstäbe übertragen haben, werden die Steuerstäbe zurückgesetzt, um neue Konturdaten zu erhalten. Sowohl der Speicherstab als auch der Steuerstab sind mit zwei pneumatisch gesteuerten Verriegelungsmechanismen ausgestattet, einer für die X-Koordinate und einer für die Y-Koordinate. Wenn beide Verriegelungen an einer bestimmten Stange gelöst werden, kann sich die Stange frei zu einer neuen Position bewegen, die durch einen Aufzug bestimmt wird. Sobald alle Stäbe eingestellt sind, werden sie in ihrer Position verriegelt und die Oberfläche ist konfiguriert.

Die US 5 796 620 A beschreibt ein Gießsystem, das herkömmliche CAD/CAM-Software verwendet, um die Stäbe einer Stiftform automatisch so zu positionieren, dass die Oberflächenkonturen eines auf einer CAD-Maschine gezeichneten Objekts durch die Stabendflächen nachgebildet werden, wenn das Objekt in die Stiftform gegossen wird. Das System modifiziert die Datenbank, um die Kunststoffauskleidung und Auskleidungsvariationen zu berücksichtigen, um die Herstellung von Styroporkernen im Lost Foam Casting-Verfahren zu ermöglichen, während die Stiftform eine Stab- und Lochkonfiguration in den Führungsplatten enthält, die eine automatische Positionierung und Reibungsverriegelung der Stäbe in der Stiftform ermöglicht.

Die CN 103752691 A beschreibt eine diskrete flexible Matrize. Eine obere diskrete Matrize ist mit einer oberen Seite einer Presse verbunden. Eine untere diskrete Matrize ist mit einer Basis der Presse kombiniert und umfasst einen unteren Matrizenträger. Die Formanpassung wird durch die Annahme elektrischer Schubstangen realisiert, die durch eine Schaltung gesteuert werden, und Stempel werden durch hydraulische Spannhülsen verriegelt, nachdem die Formanpassung abgeschlossen ist. Die Stempel haben eine hohe Tragfähigkeit, wodurch sie für das Formen von Platten und das Stützen von Teilen verwendet werden können.

Eine Aufgabe der vorliegenden Erfindung ist es, eine Form zum flexiblen Ausbilden einer Formoberfläche der eingangs beschriebenen Art bereit zu stellen, so dass eine sichere Positionierung der die Formoberfläche bildenden Stiftsegmente, insbesondere bei vergleichsweise hohen Prozesskräften des Fertigungsverfahrens, erfolgen kann. Dies soll insbesondere für Umformprozesse, insbesondere für das Tiefziehen, ermöglicht werden. In jedem Fall soll dies möglichst einfach, kostengünstig und bzw. oder bauraumsparend erfolgen. Zumindest soll eine Alternative zu den bisher bekannten Möglichkeiten zur Verfügung gestellt werden.

Die Aufgabe wird erfindungsgemäß durch eine Form zum flexiblen Ausbilden einer Formoberfläche mit den Merkmalen des Patentanspruchs 1 gelöst. Vorteilhafte Weiterbildungen sind in den Unteransprüchen beschrieben.

Somit betrifft die vorliegende Erfindung eine Form zum flexiblen Ausbilden einer Formoberfläche mit einer Mehrzahl von Stiftsegmenten mit jeweils einer Stirnseite, welche gemeinsam die Formoberfläche bilden, mit einem ersten Führungselement mit einer Mehrzahl von Durchgangsöffnungen und mit einem Klemmelement mit einer Mehrzahl von Durchgangsöffnungen, wobei die Stiftsegmente entlang ihrer länglichen Erstreckungsrichtung durch die Durchgangsöffnungen des ersten Führungselements und durch die Durchgangsöffnungen des Klemmelements linear und parallel zueinander beweglich verlaufen, wobei das erste Führungselement und das Klemmelement entlang der Stiftsegmente gegenüber einander beweglich sind und wobei die Ränder der Durchgangsöffnungen des Klemmelements zumindest abschnittsweise federelastisch biegsam ausgebildet und von der Ebene des Klemmelements weggebogen sind, um vom ersten Führungselement klemmend gegen die Stiftsegmente gedrückt zu werden.

Die relative Beweglichkeit von erstem Führungselement und Klemmelement zueinander kann einseitig umgesetzt werden, d.h. das erste Führungselement kann beweglich und das Klemmelement relativ zum ersten Führungselement feststehend angeordnet sein, oder umgekehrt. Auch können sowohl das erste Führungselement und das Klemmelement zueinander beweglich sein.

In jedem Fall kann eine relative Bewegung derartig erfolgen, dass die Ränder der Durchgangsöffnungen des Klemmelements, welche von der Ebene des Klemmelements weggebogen und federelastisch ausgebildet sind, durch den Kontakt des ersten Führungselements mit dem Klemmelement zur jeweiligen Durchgangsöffnung des Klemmelements hin bzw. in die jeweilige Durchgangsöffnung des Klemmelements hinein gedrückt werden können, um hierdurch die jeweilige Durchgangsöffnung des Klemmelements zu verengen. Durch das Verengen der Durchgangsöffnungen des Klemmelements können die Ränder der Durchgangsöffnungen des Klemmelements überhaupt erst in Kontakt mit der Außenfläche des jeweiligen Stiftsegments kommen oder, falls bereits ein Kontakt besteht, kann die Kraft dieses Kontakts erhöht werden.

In jedem Fall kann hierdurch eine im Wesentlichen radiale Klemmkraft der Ränder der Durchgangsöffnungen des Klemmelements gegenüber den Außenflächen der Stiftsegmente erzeugt werden, um die Stiftsegmente einfach und sicher in ihrer aktuellen Positionierung entlang ihrer länglichen Erstreckungsrichtung bzw. entlang ihrer linearen Bewegungsrichtung zu verklemmen bzw. zu verspannen. Entsprechend kann das erste Führungselement auch als erstes Presselement und das Klemmelement als Spannelement bezeichnet werden. Dabei kann die Stärke dieser Spann- bzw. Klemmkraft über die Dimensionierung sowie Konturgebung der Durchgangsöffnungen des Klemmelements bzw. dessen innenseitiger Ränder sowie über das Material und die Stärke bzw. Dicke des Klemmelements sehr einfach beeinflusst bzw. bestimmt werden. Hierdurch lassen sich auch Spann- bzw. Klemmkräfte erzeugen, um die Stiftsegmente sogar bei hohen Prozesskräften wie beispielsweise beim Tiefziehen sicher in ihrer Positionierung halten zu können.

Die Stirnseiten bzw. die Stirnflächen der Stiftsegmente sind ausgebildet, um gemeinsam die gewünschte Formoberfläche zu bilden, welche durch die unterschiedlichen Positionierungen der einzelnen Stiftsegmente entlang der linearen Richtung flexibel gestaltet werden kann. Hierzu können die Stirnflächen der Stiftsegmente gleich oder unterschiedlich ausgebildet sein, wobei eine gleiche bzw. identische Ausbildung der Stirnflächen der Stiftsegmente zu bevorzugen sein kann. Die Stirnflächen der Stiftsegmente können in jedem Fall flach bzw. eben, gebogen bzw. gewölbt, eckig und dergleichen sowie glatt, rau oder profiliert ausgebildet sein. Hierdurch kann die sich gemeinsam ausbildende Formoberfläche in ihrer Gestaltung bzw. Kontur beeinflusst werden. Es können auch Stiftsegmente mit unterschiedlichen Stirnflächen austauschbar alternativ zueinander verwendet werden, was vorzugsweise einheitlich aber auch gemischt erfolgen kann. Dies kann die Flexibilität der Gestaltung der gemeinsam ausbildenden Formoberfläche weiter erhöhen. In jedem Fall können auch feststehende oder sonstige weitere Elemente der Form dazu beitragen, die gewünschte Formoberfläche zu bilden.

Die Stiftsegmente sind länglich entlang ihrer linearen Bewegungsrichtung ausgebildet. Die Stiftsegmente sind hinsichtlich ihrer länglichen Gestalt vorzugsweise identisch ausgebildet, es können aber auch unterschiedliche Stiftsegmente verwendet werden. Ggfs. können die Durchgangsöffnungen derart gestaltet sein, um unterschiedliche Stiftsegmente verwenden zu können. Unterschiede zwischen den Stiftsegmenten können in der Kontur bzw. im Querschnitt sowie im Durchmesser liegen, aber auch in der Länge sowie in der Gestaltung der Stirnflächen, wie bereits zuvor beschrieben. In jedem Fall können die Stiftsegmente vorzugsweise mit einem kreisförmigen Querschnitt ausgebildet sein, so dass die Stiftsegmente in ihrer länglichen Erstreckungsrichtung zylindrisch geformt sind.

In jedem Fall entsprechen die Durchgangsöffnungen des Klemmelements bzw. deren Ränder wenigstens abschnittsweise und vorzugsweise vollständig der Kontur bzw. der Außenfläche der Stiftsegmente bzw. des jeweiligen Abschnitts der Stiftsegmente, so dass die zuvor beschriebene spannende bzw. klemmende Wirkung erzielt werden kann. Gleichzeitig kann die spannende bzw. klemmende Wirkung der Ränder der Durchgangsöffnungen des Klemmelements wie zuvor beschrieben reduziert oder aufgehoben werden, um die lineare Beweglichkeit der Stiftsegmente zu ermöglichen.

In jedem Fall weist das Klemmelement eine flächige Erstreckung auf, d.h. ist in einer Dimension als Ebene deutlich größer ausgebildet als in der kartesischen Raumrichtung senkrecht zu dieser Ebene, so dass die Stiftsegmente zumindest im Wesentlichen und vorzugsweise genau senkrecht zu dieser Ebene durch die Durchgangsöffnungen des Klemmelements hindurch verlaufen. Die federelastischen Ränder der Durchgangsöffnungen des Klemmelements sind somit ausreichend von dieser Ebene einheitlich zu einer Seite oder auch teilweise zu beiden Seiten weggebogen, wie zuvor beschrieben, und können vom ersten Führungselement zur Ebene hin gedrückt bzw. gepresst werden, um die Durchgangsöffnungen zu verengen, wie zuvor beschrieben.

Je nach Dimensionierung der Durchgangsöffnungen bzw. deren weggebogener Ränder gegenüber den Stiftsegmenten können die Ränder der Durchgangsöffnungen des Klemmelements dann, wenn das erste Führungselement das Klemmelement nicht berührt oder zumindest keine Kraft auf das Klemmelement ausübt, in der weggebogenen Stellung sein und damit die Stiftsegmente nicht berühren bzw. zumindest keine klemmende Kraft auf die Stiftsegmente ausüben, so dass die längliche Beweglichkeit der Stiftsegmente gar nicht von dem Klemmelement beeinträchtigt wird.

Alternativ kann jedoch auch ein ausreichender aber begrenzter Kontakt zwischen den Rändern der Durchgangsöffnungen des Klemmelements und den Stiftsegmenten bestehen, um im Wesentlichen das Eigengewicht der Stiftsegmente aufzunehmen und hierdurch die Stiftsegmente in ihrer Positionierung zu halten, aber gleichzeitig eine lineare Beweglichkeit der gehaltenen Stiftsegmente bei Anlegen einer ausreichenden Kraft zu ermöglichen. Somit kann eine haltende Wirkung vom Klemmelement auf die Stiftsegmente ausgeübt werden, ohne deren lineare Beweglichkeit zu sehr zu behindern, d.h. um gleichzeitig deren veränderliche Positionierung zu ermöglichen. Hierdurch können die Stiftsegmente haltend mit dem Klemmelement verbunden werden, um gemeinsam gehandhabt zu werden.

In diesem Fall können die Ränder der Durchgangsöffnungen des Klemmelements bei entsprechender Dimensionierung vom jeweiligen Stiftsegment von der Ebene federelastisch weggedrückt werden, so dass über die Abstimmung der Gestaltung der Ränder der Durchgangsöffnungen des Klemmelements und der Stiftsegmente das Maß der Haltekraft bestimmt werden kann. Entsprechend können die Ränder der Durchgangsöffnungen des Klemmelements vom ersten Führungselement wieder über ihre weggebogene unbelastete Stellung hinaus entgegengesetzt zur Ebene hin gehoben werden, um die Klemmung des Stiftsegments wie zuvor beschrieben auszuführen.

Die Anordnung der Durchgangsöffnungen in der gemeinsamen Ebene bzw. im Material des Klemmelements kann beliebig derartig erfolgen, um durch die längliche veränderliche Positionierung der Stiftsegmente gemeinsam die gewünschte Formoberfläche zu erhalten. Entsprechend können die Stiftsegmente senkrecht zur linearen Bewegungsrichtung zumindest teilweise zueinander signifikant beabstandet sein, was gleichmäßig oder unterschiedlich erfolgen kann. Hierdurch können Lücken zwischen den Stiftsegmenten bzw. deren Stirnflächen gebildet werden, um mit vergleichsweise wenigen Stiftsegmenten die gewünschte Formoberfläche zumindest grob zu bilden. Dies kann für manche Anwendungen ausreichend sein und den Aufwand der Umsetzung sowie das Gewicht der Form reduzieren. Vorzugsweise sind die Stiftsegmente jedoch dicht bzw. möglichst lückenlos zueinander angeordnet, um gemeinsam eine möglichst durchgängige gewünschte Formoberfläche zu bilden. Dies kann dadurch begünstigt werden, indem die Stiftsegmente im Bereich der Durchgangsöffnungen des Klemmelements dünner bzw. schmaler ausgebildet sind als im Bereich der Stirnfläche, welche somit sehr dicht oder sogar einander berührend ausgebildet sein können, um die sich ausbildende Formoberfläche möglichst lückenlos zu bilden.

Je nach Ausgestaltung können die Durchgangsöffnungen des Klemmelements ein entsprechendes Raster aufweisen bzw. in einem entsprechenden Raster im Material des Klemmelements ausgebildet sein. Die Durchgangsöffnungen des Klemmelements können hierzu linien- und spaltenförmig zueinander angeordnet sein, aber auch zueinander versetzt, beispielsweise wie bei einer Wabenstruktur. Auch hierdurch kann die gemeinsame gewünschte Formoberfläche gestaltet werden.

Vorzugsweise kann die Klemmelement aus Federstahl bzw. als Federstahlplatte ausgebildet sein. Unter Federstahl wird dabei ein Stahl verstanden, welcher eine im Vergleich zu anderen Stählen höhere Festigkeit aufweist. Hierdurch kann das Klemmelement stabil und gleichzeitig elastisch bzw. federelastisch ausgebildet werden.

In jedem Fall kann auf diese Art und Weise erfindungsgemäß eine Form zum flexiblen Ausbilden einer gemeinsamen Formoberfläche geschaffen werden, indem die Stiftsegmente linear stufenlos und flexibel positioniert und in der gewünschten Positionierung gehalten werden können. Das Positionieren kann beispielsweise durch eine Einstellvorrichtung erfolgen, welche mittels eines Positioiniermittels jedes Stiftsegments einzeln oder mehrere bzw. alle Stiftsegmente gemeinsam individuell entlang ihrer länglichen Erstreckung positionieren kann. Dies kann beispielsweise vom der Stirnfläche gegenüberliegenden Ende der Stiftsegmente durch Anheben gegen die Gewichtskraft der Stiftsegmente bzw. durch Drücken gegen eine haltende Kraft des Klemmelements erfolgen, wie zuvor beschrieben. Ggfs. kann die Einstellvorrichtung hierzu senkrecht zur länglichen Erstreckungsrichtung der Stiftsegmente verfahren werden. Ggfs. kann auch ein Ziehen vom den Stirnflächen gegenüberliegenden Ende der Stiftsegmente oder ein Drücken auf die Stirnflächen der Stiftsegmente erfolgen, um die Positionierung entlang der linearen Bewegungsrichtung der Stiftsegmente zu verändern. Dabei kann das Drücken, vorzugsweise von einer Person ausgeführt, vorzugsweise für alle Stiftsegmente in eine ebene Fläche erfolgen, welche als Ausgangsposition der Stiftsegmente angesehen werden kann, aus welcher heraus ein gewünschtes Positionieren durch Drücken bzw. Anheben vom den Stirnflächen gegenüberliegenden Ende der Stiftsegmente erfolgen kann.

In jedem Fall kann, sobald alle Stiftsegmente wie gewünscht positioniert sind, ein gleichzeitiges Klemmen seitens des Klemmelements erfolgen, so dass die sichere Positionierung der die Formoberfläche bildenden Stiftsegmente erfolgen kann. Bei ausreichend starker Klemmung kann dies auch für vergleichsweise hohe Prozesskräften des Fertigungsverfahrens erfolgen, was auch für Umformprozesse und sogar für das Tiefziehen ermöglicht werden kann. Dank des zuvor beschrieben Klemmmechanismus mit Klemmelement und erstem Führungselement kann dies vergleichsweise einfach, kostengünstig und bzw. oder bauraumsparend erfolgen.

Die klemmende Bewegung zwischen dem ersten Führungselement und dem Klemmelement kann dabei durch beliebige mechanische, elektromechanische, elektrische, hydraulische oder pneumatische Mittel sowie durch Kombinationen hiervon umgesetzt werden. Beispielsweise können das erste Führungselement und das Klemmelement, insbesondere randseitig, über ein entsprechendes Mittel, vorzugsweise an mehreren gleichmäßig verteilten Stellen zur Ausübung paralleler Kräfte, insbesondere verklemmungsfrei, verbunden sein und verspannt bzw. geklemmt werden, so dass beispielsweise mittels eines elektromechanischen, hydraulischen oder pneumatischen Antriebs bei Betätigung die zuvor beschriebene Bewegung erfolgen bzw. die zuvor beschriebene Klemmkraft ausgeübt werden kann. Dies kann auch elektrisch, beispielsweise magnetisch, erfolgen. Dies kann auch rein mechanisch erfolgen, beispielsweise durch Hebel, insbesondere Exzenterhebel, durch Verschrauben gegeneinander oder dergleichen.

Gemäß einem Aspekt der Erfindung sind die Ränder der Durchgangsöffnungen des Klemmelements den Stirnseiten der Stiftsegmente zugewandt von der Ebene des Klemmelements weggebogen. Dies kann allgemein eine Möglichkeit der Umsetzung darstellen.

Falls die Ränder der Durchgangsöffnungen des Klemmelements mit den Stiftsegmenten durchgängig in haltendem Kontakt stehen, d.h. auch dann ein haltender Kontakt vorliegt, wenn die Ränder der Durchgangsöffnungen des Klemmelements nicht vom ersten Führungselement klemmend gegen die Stiftsegmente gedrückt werden, kann auf diese Art und Weise die Reibkraft zwischen den Rändern der Durchgangsöffnungen des Klemmelements und den Außenflächen der Stiftsegmente reduziert werden, falls die Stiftsegmente in die Richtung der Biegung der Ränder der Durchgangsöffnungen des Klemmelements bewegt werden, da die weggebogenen Ränder der Durchgangsöffnungen des Klemmelements hierdurch von den Außenflächen der Stiftsegmente federnd weggedrückt werden. In der entgegengesetzten Richtung der linearen Beweglichkeit der Stiftsegmente können jedoch die Ränder der Durchgangsöffnungen des Klemmelements zu den Stiftsegmenten hin gezogen werden und somit dieser Bewegung stärker entgegenwirken. Auf diese Art und Weise kann die haltende Kraft zur Positionierung der Stiftsegmente erhöht werden, jedoch gleichzeitig deren Positionierung in der Richtung der Biegung der Ränder der Durchgangsöffnungen des Klemmelements erleichtert werden.

Gemäß einem weiteren Aspekt der Erfindung ist das erste Führungselement entlang der Stiftsegmente zwischen den Stirnseiten der Stiftsegmente und dem Klemmelement angeordnet. Dies kann allgemein eine Möglichkeit der Umsetzung darstellen. Auch kann hierdurch ein Schutz bzw. eine Abdeckung des Klemmelements gegenüber den Stirnflächen der Stiftsegmente und damit gegenüber der Formoberfläche erfolgen, so dass Verschmutzungen des Fertigungsprozesses von dem Klemmelement ferngehalten werden können. Dies kann Verunreinigungen sowie Beschädigungen des Klemmelements vermeiden helfen.

Gemäß einem weiteren Aspekt der Erfindung befinden sich die Ränder der Durchgangsöffnungen des Klemmelements auch in Kontakt mit den Stiftsegmenten, wenn die Ränder der Durchgangsöffnungen des Klemmelements vom ersten Führungselement nicht gegen die Stiftsegmente gedrückt werden. Hierdurch kann eine entsprechende haltende Wirkung erzeugt werden, wie zuvor bereits beschrieben.

Gemäß einem weiteren Aspekt der Erfindung sind das erste Führungselement und das Klemmelement entlang der Stiftsegmente derart gegenüber einander beweglich ausgebildet, so dass in einer ersten Positionierung das erste Führungselement gegenüber den Ränder der Durchgangsöffnungen des Klemmelements beanstandet ist und in einer zweiten Positionierung das erste Führungselement die Ränder der Durchgangsöffnungen des Klemmelements gegen die Stiftsegmente drückt. Wie bereits zuvor beschrieben sei hierdurch klargestellt, dass das erste Führungselement und das Klemmelement gegenüber einander wenigstens in diesen beiden Positionierungen angeordnet werden können, um die zuvor beschriebenen Eigenschaften umzusetzen.

Gemäß einem weiteren Aspekt der Erfindung werden die Ränder der Durchgangsöffnungen des Klemmelements von radialen Einschnitten in biegsame Lamellen des Klemmelements unterteilt. Mit anderen Worten sind die Ränder der Durchgangsöffnungen des Klemmelements in der Umfangsrichtung bzw. entlang des Randes radial bzw. senkrecht zum Rand durch Materialaussparungen unterbrochen, so dass jeweils zwischen zwei unmittelbar benachbarten Einschnitten bzw. Materialaussparungen jeweils ein Bereich des Rands der Durchgangsöffnung des Klemmelements gebildet wird, welcher federelastisch biegsam ist, wie zuvor beschrieben. Diese Bereiche können als Lamellen bezeichnet werden. Dies kann eine Möglichkeit zur Umsetzung dieser Merkmale darstellen. Auch können hierdurch Lamellen bzw. Ränder der Durchgangsöffnungen des Klemmelements geschaffen werden, welche eine vergleichsweise gute federelastische Biegsamkeit aufweisen können. Das Maß der federelastischen Biegsankeit kann insbesondere durch die radiale Tiefe der radialen Einschnitte beeinflusst werden.

Gemäß einem weiteren Aspekt der Erfindung sind wenigstens drei, vorzugsweise gleichmäßig zueinander beabstandete, radiale Einschnitte ausgebildet. Hierdurch können, insbesondere bei einer zumindest im Wesentlichen und insbesondere vollständig kreisrunden Durchgangsöffnung des Klemmelements, derart federelastisch biegsame Lamellen wie zuvor beschrieben ausgebildet werden, ohne dabei die Steifigkeit des Klemmelements übermäßig zu schwächen. Dies kann die Ausbildung von federelastisch biegsamen Lamellen ermöglichen, welche gleichzeitig eine vergleichsweise hohe Haltekraft und bzw. oder Klemmkraft auf die Stiftsegmente ausüben können.

Gemäß einem weiteren Aspekt der Erfindung schließen sich den radialen Einschnitten abschnittsweise Hinterschnitte der biegsamen Lamellen des Klemmelements an. Mit anderen Worten umgreifen die Materialaussparungen die biegsamen Lamellen abschnittweise, was die Biegsamkeit erhöhen kann.

Gemäß einem weiteren Aspekt der Erfindung sind die radialen Einschnitte zusammen mit den Hinterschnitten T-förmig ausgebildet. Dies kann eine Möglichkeit zur Umsetzung darstellen. Insbesondere können auf diese Art und Weise zwei unmittelbar benachbarte biegsame Lamellen ausgebildet werde.

Gemäß einem weiteren Aspekt der Erfindung werden die Stiftsegmente vom ersten Führungselement lose geführt. Hierdurch können die entsprechenden zuvor bereits beschriebenen Merkmale umgesetzt werden.

Gemäß einem weiteren Aspekt der Erfindung weist die Form ein zweites Führungselement mit einer Mehrzahl von Durchgangsöffnungen auf, wobei die Stiftsegmente entlang ihrer länglichen Erstreckungsrichtung auch durch die Durchgangsöffnungen des zweiten Führungselements linear und parallel zueinander beweglich verlaufen, wobei das Klemmelement zwischen dem ersten Führungselement und dem zweiten Führungselement angeordnet ist, wobei das zweite Führungselement und das Klemmelement entlang der Stiftsegmente gegenüber einander beweglich sind und wobei das zweite Führungselement ausgebildet ist, das Klemmelement abzustützen, wenn die Ränder der Durchgangsöffnungen des Klemmelements vom ersten Führungselement gegen die Stiftsegmente gedrückt werden.

Mit anderen Worten kann das Klemmelement auf diese Art und Weise entlang der länglichen Erstreckungsrichtung der Stiftsegmente zwischen den beiden Führungselementen angeordnet werden, um beidseitig kontaktiert und gedrückt bzw. gepresst werden zu können. Dies kann die klemmende Wirkung verbessern. Dabei kann auch das zweite Führungselement wie zuvor beschrieben gegenüber dem Klemmelement beweglich sein und geklemmt werden, wie zuvor beschrieben.

Gemäß einem weiteren Aspekt der Erfindung sind das erste Führungselement, das Klemmelement und das zweite Führungselement entlang der Stiftsegmente derart gegenüber einander beweglich ausgebildet, so dass in einer ersten Positionierung das erste Führungselement gegenüber den Ränder der Durchgangsöffnungen des Klemmelements und das zweite Führungselement gegenüber dem Klemmelement beanstandet sind und in einer zweiten Positionierung das erste Führungselement die Ränder der Durchgangsöffnungen des Klemmelements gegen die Stiftsegmente und das zweite Führungselement gegen das Klemmelement drückt. Hierdurch kann die entsprechende Klarstellung der Bewegungen und Positionierungen wie zuvor beschrieben auch für das zweite Führungselement erfolgen.

Gemäß einem weiteren Aspekt der Erfindung ist das zweite Führungselement entlang der Stiftsegmente den Stirnseiten der Stiftsegmente abgewandt gegenüber dem Klemmelement angeordnet. Dies kann eine konkrete Umsetzung der zuvor beschriebenen Merkmale und Eigenschaften darstellen.

Gemäß einem weiteren Aspekt der Erfindung werden die Stiftsegmente vom zweiten Führungselement lose geführt. Hierdurch können die entsprechenden zuvor beschriebenen Eigenschaften auch bei dem zweiten Führungselement umgesetzt werden.

Gemäß einem weiteren Aspekt der Erfindung weisen die Stiftsegmente entlang ihrer länglichen Erstreckungsrichtung jeweils einen Endabschnitt mit der jeweiligen Stirnseite und einen Führungsabschnitt auf, wobei die Führungsabschnitte jeweils durch die Durchgangsöffnungen des ersten Führungselements und durch die Durchgangsöffnungen des Klemmelements, vorzugsweise und durch die Durchgangsöffnungen des zweiten Führungselements, verlaufen und wobei die Endabschnitte quer zur länglichen Erstreckungsrichtung der Stiftsegmente größer als die Durchgangsöffnungen des ersten Führungselements und bzw. oder die Durchgangsöffnungen des Klemmelements, vorzugsweise und bzw. oder die Durchgangsöffnungen des zweiten Führungselements, ausgebildet sind. Hierdurch können die entsprechenden zuvor beschrieben Merkmale und Eigenschafen konkret umgesetzt werden.

Mit anderen Worten betrifft die vorliegende Erfindung das technische Gebiet der Umformtechnik, der formgebende Verfahren bzw. des Urformens.

Die Erfindung kann vorzugsweise jegliche Formen erstellen, um diese Formen dann als Werkzeug zu nutzen, z.B. im Tiefziehen, im Thermoformen, in der Vakuuminfusion, im Faserverbundlaminieren und in ähnlichen Verfahren, die eine Werkzeugform zur Herstellung eines Produktes benötigen.

Die Erfindung kann mit einer Vielzahl von Stiftsegmenten eine segmentierte Oberfläche erschaffen, welche direkt als Werkzeug genutzt werden kann. Dabei kann die Maschine bzw. die Einstellvorrichtung die immer gleichen Stiftsegmente nutzen, um immer verschiedene Werkzeuge bzw. Formen herzustellen. Dadurch können Werkzeuge bzw. Formen digital gespeichert sowie einfacher und schneller erstellt werden als herkömmliche Verfahren wie z.B. mittels des Metallfräsens. Bekannt sind bisher herkömmliche Verfahren wie Metallfräsen, 3D-Druck oder Spritzguss.

Nachteilig bei den herkömmlichen Verfahren sind hohe Anschaffungskosten und Maschinenstundenkosten. Weiter benötigen herkömmliche Verfahren eine Vielzahl von Stunden, um ähnliche Werkzeuge herzustellen. Materialverlust schlägt sowohl beim 3D-Druck als auch beim Metallfräsen zu Buche. Jedes neue Werkzeug braucht auch neues Material. Beide Verfahren benötigen einen Fachmann, um sie zu bedienen. Die Bedienkomplexität ist dabei sehr hoch. Schneidwerkzeuge müssen ausgetauscht werden, 3D-Drucker-Düsen ebenfalls. Nicht nur die Maschinen haben einen hohen Platzbedarf, sondern auch die Werkzeuge, die erstellt und physisch gelagert werden müssen.

Hiervon ausgehend wurde als Form eine Wanne entwickelt, in der sich sehr viele sehr schmale Stiftsegmenten verbergen können, vorzugsweise mit einem Durchmesser von ca. 3 mm bis ca. 5 mm. Diese können von unten nach oben in Position gedrückt werden. Dabei kann eine Einstellvorrichtung in einer Ebene parallel zur Wanne entlangfahren und jeweils die gewünschten Stiftsegmente in Position drücken. Nachdem diese Positionen erreicht sind, also die Gesamtheit aller Stiftsegmente eine bestimmte Figur, Form bzw. Oberflächenkontur abbilden, ist ein Werkzeug entstanden. Dieses kann nun durch einen Einklemmmechanismus fixiert werden, um etwaigen Verformungen standhalten zu können. Danach kann diese Wanne mit der fixierten Form aus der Einstellvorrichtung gehoben und zur Weiterverarbeitung mit Fertigungsvorrichtungen genutzt werden.

Der Einklemmmechanismus kann eine, beispielsweise aus Federstahl gelaserte, Platte als Klemmelement aufweisen. Bohrungen dieser Platte können sich mittels Lamellen leicht verengen, also leicht schmaler als die Stifte ausgebildet sein, die durch die Lamellen bzw. Bohrungen hindurchgehen. Die weiteren beiden Platten als Führungselemente können zunächst im geöffneten Zustand zueinander sowie zum Klemmelement beabstandet sein, also nicht zueinander verschraubt sein. Dies kann es den Lamellen erlauben, sich elastisch zu verformen und jeweils den Stift durchzulassen, wenn der jeweilige Stift verfahren wird. Eine leichte Reibkraft der Lamellen zu dem Stift kann dazu führen, dass der Stift nach dem Verfahren automatisch seine Position hält, was wünschenswert sein kann. Um nun den Stift sicher festzustellen, können die weiteren Platten als Führungselemente zueinander verschraubt werden. Die weiteren Platten als Führungselemente können die Lamellen des Klemmelements nun so stark quetschen, dass kein elastische Verformung mehr stattfinden kann, welches dazu führen kann, dass Reibkräfte den Stift ähnlich wie in einer Pressepassung halten.

Die Vorteile können eine einfache Bedienung, kein Materialverlust, kein Verschleiß von Schneiden oder Düsen, geringe Anschaffungskosten und bzw. oder die schnelle Erstellung der Werkzeuge sein. Ferner können Werkzeuge bzw. Formen digital gespeichert werden und müssen nicht physisch bzw. physikalisch gelagert werden. Rentable Losgröße können bei 1 beginnen, da hohe Material-, Maschinen- und Personalkosten entfallen. Insgesamt kann dies zu einer Reduzierung von benötigten Umweltressourcen führen, da eine nachhaltige Maschine entwickelt werden kann.

Beispielsweise kann, Stichwort Rapid Prototyping, anhand von CAD Daten z.B. die Form einer zerbrechlichen Glühbirne geschaffen werden. Diese Daten können erhalten werden, noch bevor die Glühbirne erstellt wurde. Aus diesen Daten kann die Werkzeugform der Glühbirne errechnet und dann die Stifte in die gewünschten Positionen verfahren werden. Nachdem das Werkzeug erstellt wurde, kann dieses in eine Tiefziehanlage überführt werden, um dann z.B. eine passgenaue Verpackung für diese Glühbirne zu erstellen.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine perspektivische Explosionsdarstellung einer erfindungsgemäßen Form gemäß einem ersten Ausführungsbeispiel mit lediglich einem dargestellten Stiftsegment;
- Figur 2: eine perspektivische Darstellung der erfindungsgemäßen Form gemäß dem ersten Ausführungsbeispiel mit allen Stiftsegmenten in einer zweiten, geschlossenen Positionierung;
- Figur 3: eine perspektive Explosionsdarstellung mehrerer Stiftsegmente einer erfindungsgemäßen Form gemäß einem zweiten Ausführungsbeispiel,
- Figur 4: eine perspektivische Darstellung eines Ausschnitts eines Klemmelements der erfindungsgemäßen Form gemäß dem zweiten Ausführungsbeispiel;
- Figur 5: eine seitliche Darstellung in der Längsrichtung eines Ausschnitts der Figur 3;
- Figur 6: einen Ausschnitt der Figur 3; und
- Figur 7: einen Ausschnitt der Figur 5.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann und der Richtung der Schwerkraft entspricht. Die Längsrichtung X und die Querrichtung Y bilden gemeinsam die Horizontale X, Y, welche auch als horizontale Ebene X, Y bezeichnet werden kann.

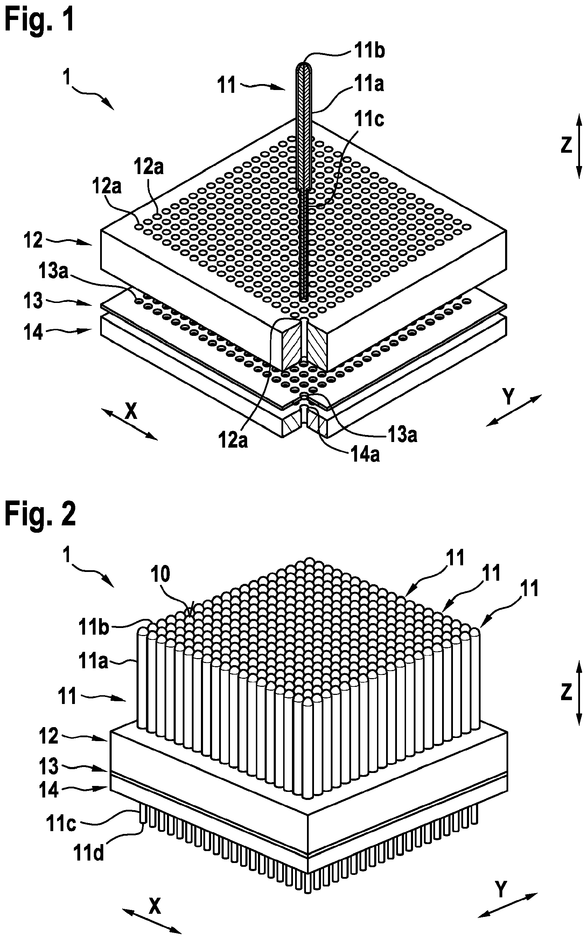

Figur 1 zeigt eine perspektivische Explosionsdarstellung einer erfindungsgemäßen Form 1 gemäß einem ersten Ausführungsbeispiel mit lediglich einem dargestellten Stiftsegment 11. Figur 2 zeigt eine perspektivische Darstellung der erfindungsgemäßen Form 1 gemäß dem ersten Ausführungsbeispiel mit allen Stiftsegmenten 11 in einer zweiten, geschlossenen Positionierung. Die Form 1 kann auch als Formwerkzeug 1 oder kurz nur als Werkzeug 1 bezeichnet werden. Die Stiftsegmente 11 können auch als Formelemente 11, als Stifte 11 oder als Modellierungselemente 11 bezeichnet werden.

Die Form 1 weist ein erstes Führungselement 12 auf, welches ein oberes Führungselement 12 darstellt. Das erste, obere Führungselement 12 kann auch als erste, obere Führungsplatte 12 oder als erstes, oberes Presselement 12 bezeichnet werden. Das erste, obere Führungselement 12 ist quadratisch ausgebildet und weist, von einem gewissen Rand (nicht bezeichnet) umgeben, ein Raster von Durchgangsöffnungen 12a auf, welche schachbrettartig bzw. in Linien und Reihen angeordnet sind. Das erste, obere Führungselement 12 erstreckt sich flächig in der Horizontalen X, Y und die Durchgangsöffnungen 12a erstrecken sich in der vertikalen Richtung Z durch das erste, obere Führungselement 12 hindurch, siehe beispielsweise die Schnittansicht der vorderen Ecke der Figur 1.

Die Form 1 weist auch ein zweites Führungselement 14 auf, welches ein unteres Führungselement 14 darstellt und entsprechend auch als zweite, untere Führungsplatte 14 oder als zweites, unteres Presselement 14 bezeichnet werden kann. Auch das zweite, untere Führungselement 14 weist ein Raster von Durchgangsöffnungen 14a auf, wobei die Durchgangsöffnungen 14a des zweiten, unteren Führungselements 14 in Anzahl und Anordnung den Durchgangsöffnungen 12a des ersten, oberen Führungselements 12 entsprechen. Grundsätzlich ist das zweite, untere Führungselement 14 identisch zum ersten, oberen Führungselement 12 ausgebildet, jedoch mit einer etwas geringeren Dicke in der vertikalen Richtung Z. Beide Führungselemente 12, 14 sind einstückig, d.h. integral, aus einem harten Werkstoff wie beispielsweise aus Stahl ausgebildet.

In der vertikalen Richtung Z ist zwischen den beiden Führungselementen 12, 14 ein Klemmelement 13 in Form einer Federstahlplatte 13 angeordnet, welches auch als Spannelement 13 bezeichnet werden kann. Das Klemmelement 13 ist aus Federstahl ausgebildet, um gleichzeitig stabil und elastisch bzw. federelastisch biegsam zu sein. Das Klemmelement 13 erstreckt sich ebenfalls flächig in der Horizontalen X, Y und ist als Blech vergleichsweise dünn in der vertikalen Richtung Z ausgebildet. Auch das Klemmelement 13 weist eine gleiche Anzahl und Anordnung von Durchgangsöffnungen 13a auf. Das Klemmelement 13 wird im Detail weiter unten anhand des zweiten Ausführungsbeispiels der Form 1 erklärt werden, weist jedoch gemäß des ersten Ausführungsbeispiels der Form 1 dieselbe Funktion bzw. Funktionsweise auf.

In jedem Fall weist die Form 1 ferner ein Stiftsegment 11 pro Durchgangsöffnung 12a des ersten, oberen Führungselements 12, pro Durchgangsöffnung 13a des Klemmelements 13 sowie pro Durchgangsöffnung 14a des zweiten, unteren Führungselements 14 auf. Die Stiftsegmente 11 sind dabei identisch, sich länglich in der vertikalen Richtung Z erstreckend, zylindrisch sowie einstückig, d.h. integral, aus Stahl ausgebildet. Die Stiftsegmente 11 weisen jeweils entlang der vertikalen Richtung Z oben einen Endabschnitt 11a auf, welche in der Horizontalen X, Y derart groß bzw. breit ausgebildet sind, so dass sich die unmittelbar benachbart angeordneten Stiftsegmente 11 linienförmig berühren. Hierdurch kann eine nahezu lückenlose Anordnung der Stiftsegmente 11 bzw. zumindest deren Endabschnitte 11a erreicht werden.

Die Endabschnitte 11a der Stiftsegmente 11 enden in der vertikalen Richtung Z mit einer Stirnseite 11b, welche auch als Außenseite 11b bezeichnet werden kann. Die Stirnseiten 11b sind jeweils halbkugelförmig ausgebildet. Die Stirnseiten 11b der Stiftsegmente 11 bzw. deren Endabschnitt 11a bilden gemeinsam eine Formoberfläche 10 der Form 1, welche auch als segmentierte Oberfläche 10 der Form 1 bezeichnet werden kann.

In der vertikalen Richtung Z schließt sich dem Endabschnitt 11a der Stiftsegmente 11 jeweils ein Führungsabschnitt 11c an, welche jeweils einen geringeren Durchmesser als die Endabschnitt 11a aufweisen. Die Kontur und die Maße der Führungsabschnitt 11c der Stiftsegmente 11 sind derart auf die Durchgangsöffnungen 12a des ersten, oberen Führungselements 12 und der Durchgangsöffnungen 14a des zweiten, unteren Führungselements 14 abgestimmt, so dass mit einem gewissen Spiel in der Horizontalen X, Y eine Führung der Stiftsegmente 11 in der vertikalen Richtung Z erfolgen kann, ohne diese Bewegung durch Reibung zu beeinträchtigen.

Dabei ist der radiale Vorsprung der Endabschnitte 11a der Stiftsegmente 11 gegenüber den Führungsabschnitten 11c der Stiftsegmente 11 derart ausgebildet, dass die Endabschnitte 11a größer als die Durchgangsöffnungen 12a des ersten, oberen Führungselements 12 sind. Entsprechend können die Stiftsegmente 11 in der vertikalen Richtung Z von oben in die Durchgangsöffnungen 12a des ersten, oberen Führungselements 12, in die Durchgangsöffnungen 13a des Klemmelements 13 und in die Durchgangsöffnungen 14a des zweiten, unteren Führungselements 14 eingesteckt werden, jedoch nicht durch diese hindurchfallen oder hindurchgedrückt werden, da die radialen Vorsprünge der Endabschnitte 11a der Stiftsegmente 11 von den oberen Kanten (nicht bezeichnet) der Durchgangsöffnungen 12a des ersten, oberen Führungselements 12 gehalten werden.

Die Stiftsegmente 11 bzw. deren Führungsabschnitte 11c schließen in der vertikalen Richtung Z nach unten hin jeweils mit einer Rückseite 11d ab, welche auch als Drückseite 11d bezeichnet werden kann, da die Stiftsegmente 11 in der vertikalen Richtung Z von unten durch Kontakt mit der Drückseite 11d nach oben gedrückt werden können. Dies kann beispielsweise in einer Einstellvorrichtung (nicht dargestellt) mittels eines Positioniermittels einzeln nacheinander erfolgen, wobei das Positioniermittel horizontal positioniert werden kann und ein Stellelement aufweist, welches vertikal verfahren werden kann. Hierdurch kann das Positioniermittel in der Horizontalen X, Y nacheinander unter jedem Stiftsegment 11 positioniert werden und dann das jeweilige Stiftsegment 11 durch Drücken in der vertikalen Richtung Z von unten in die gewünschte jeweiligen Positionierung anheben bzw. hochdrücken. Dies kann umgekehrt durch Drücken mit der Hand einer Person in der vertikalen Richtung Z nach unten erfolgen, um eine gewünschte Formgebung der gemeinsamen Formoberfläche 10 wieder aufzuheben und eine ebene Fläche als Ausgangssituation bzw. als Ausgangspositionierung zu schaffen, in welcher die Endabschnitte 11a der Stiftsegmente 11 auf dem ersten, oberen Führungselement 12 aufliegen.

Die Formoberfläche 10 kann dadurch flexibel gestaltet werden, indem die einzelnen Stiftsegmente 11 in der vertikalen Richtung Z als Richtung ihrer linearen Beweglichkeit bzw. ihrer länglichen Erstreckung gegenüber dem ersten, oberen Führungselement 12, gegenüber dem Klemmelement 13 und gegenüber dem zweiten, unteren Führungselement 14 stufenlos so positioniert und in der Positionierung gehalten sowie anschließend geklemmt bzw. verspannt werden, so dass die gewünschte Formoberfläche 10 von allen Stiftsegmenten 11 bzw. deren Stirnseiten 11b gemeinsam gebildet wird, siehe Figur 2.

Die Festlegung der Positionierung des Stiftsegmente 11 und damit auch der gewünschten gemeinsamen Formoberfläche 10 kann durch Klemmung der Stiftsegmente 11 auch beim ersten Ausführungsbeispiel derart erfolgen, wie weiter unten anhand des zweiten Ausführungsbeispiels näher erläutert werden wird. Hierzu kann bei beiden Ausführungsbeispielen von einer ebenen bzw. glatten horizontalen Fläche bzw. Ebene als Ausgangsposition ausgegangen werden, in welcher alle Stiftsegmente 11 wie zuvor beschrieben auf der Oberseite des ersten, oberen Führungselements 12 aufliegen. Ferner sind die beiden Führungselemente 12, 14 dann in der vertikalen Richtung Z zu einander beabstandet, so dass die klemmende Wirkung des Klemmelements 13 nicht eintritt. In einer derartigen ersten, offenen bzw. losen Positionierung (nicht dargestellt) der Führungselemente 12, 14 gegenüber dem Klemmelement 13 sind die Stiftsegmente 11 in der vertikalen Richtung Z gegen eine haltende Kraft des Klemmelements 13, welche deutlich geringer als eine klemmende bzw. verspannende Kraft ist und im Wesentlichen das Eigengewicht der Stiftsegmente 11 halten kann, linear beweglich. In dieser ersten Positionierung der Führungselements 12, 14 und des Klemmelements 13 kann die Position jedes Stiftsegments 11 von unten drückend eingestellt und selbsttätig durch eine haltende Kraft gehalten werden.

Nun kann beispielsweise das erste, obere Führungselement 12 in der vertikalen Richtung Z auf das Klemmelement 13, welche auf dem zweiten, unteren Führungselement 14 aufliegt, gedrückt bzw. gepresst werden. Hierdurch kann, wie anhand des zweiten Ausführungsbeispiels im Detail erläutert werden wird, auch beim ersten Ausführungsbeispiel eine klemmende bzw. verspannende Wirkung vom Klemmelement 13 auf alle Stiftsegmente 11 erzeugt werden, um die Positionierung der Stiftsegmente 11 auch bei großen Krafteinwirkungen auf deren Stirnflächen 11b wie beispielsweise bei der Verwendung der Form 1 beim Tiefziehen zu fixieren.

Das Drücken bzw. Pressen von erstem, oberen Führungselement 12 auf das Klemmelement 13 kann erfolgen, indem das erste, obere Führungselement 12 mit dem zweiten, unteren Führungselement 14 verschraubt wird, wodurch das dazwischenliegende Klemmelement 13 zusammengepresst wird, was dann die klemmende bzw. verspannende Wirkung auf die Stiftsegmente 11 bewirkt. Das Verschrauben kann an mehreren gleichmäßig verteilten Stellen am Rand der beiden Führungselements 12, 14 erfolgen, so dass das Zusammendrücken verkantungsfrei sowie einfach und sicher erfolgen kann.

In diesem Zustand kann die Form 1 dann mit ihrer gewünschten und festverspannten Formoberfläche 10 von der Einstellvorrichtung entnommen, transportiert, gelagert sowie in einer Fertigungsvorrichtung wie beispielsweise in einer Tiefziehpresse bestimmungsgemäß verwendet werden.

Soll die aktuelle Formoberfläche 10 der Form 1 wieder aufgehoben bzw. verändert werden, so kann die Form 1 wieder von der Einstellvorrichtung aufgenommen und dann die Verschraubung gelöst werden. Ist die klemmende Wirkung des Klemmelements 13 aufgehoben, können die Stiftsegmente 11 von einer Person mit der Hand in der vertikalen Richtung Z vollständig nach unten in die Ausgangsstellung gedrückt werden. In dieser Ausgangsstellung kann die Form 1 wieder verspannt und dann gelagert werden. Ebenso kann dann direkt eine neue gewünschte Formoberfläche 10 wie zuvor beschrieben eingestellt werden.

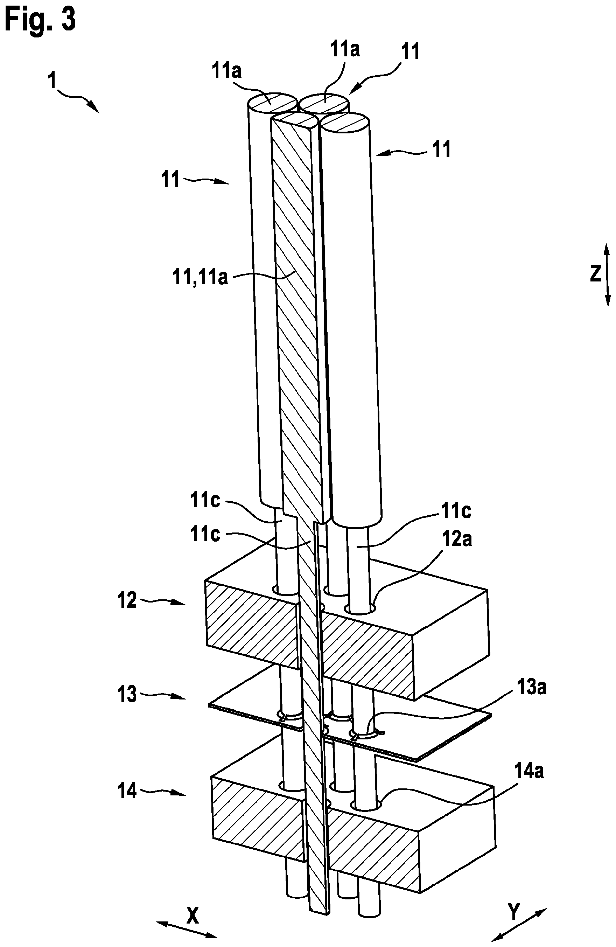

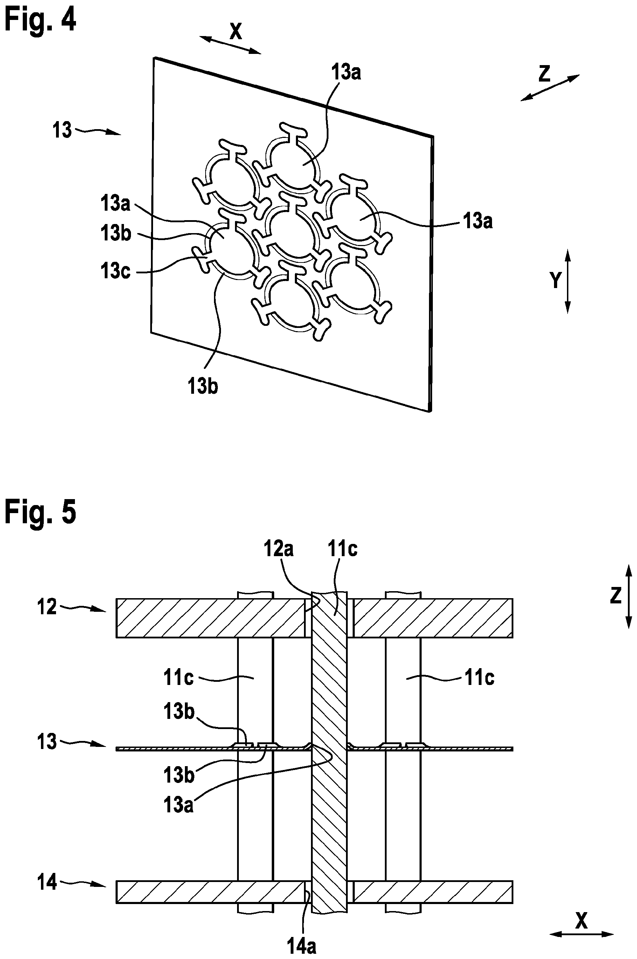

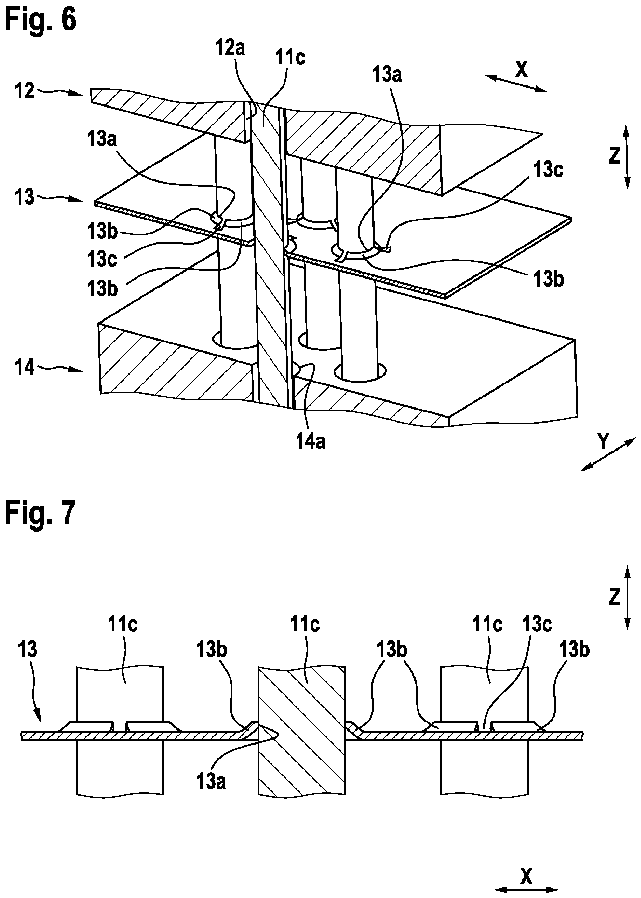

Figur 3 zeigt eine perspektive Explosionsdarstellung mehrerer Stiftsegmente 11 einer erfindungsgemäßen Form 1 gemäß einem zweiten Ausführungsbeispiel. Figur 4 zeigt eine perspektivische Darstellung eines Ausschnitts eines Klemmelements 13 der erfindungsgemäßen Form 1 gemäß dem zweiten Ausführungsbeispiel. Figur 5 zeigt eine seitliche Darstellung in der Längsrichtung X eines Ausschnitts der Figur 3. Figur 6 zeigt einen Ausschnitt der Figur 3. Figur 7 zeigt einen Ausschnitt der Figur 5.

Die Stiftsegmente 11 der Form 1 des zweiten Ausführungsbeispiels sind wabenförmig angeordnet, vgl. z. B. Figuren 3, 4 und 6. Ansonsten sind die Formen 1 der beiden Ausführungsbeispiele identisch.

Das bereits hinsichtlich des ersten Ausführungsbeispiels angesprochene Klemmen bzw. Verspannen der Stiftsegmente 11 seitens des Klemmelements 13 ist nun anhand der Figuren 3 bis 7 des zweiten Ausführungsbeispiels im Detail dargestellt. So weisen alle Durchgangsöffnungen 13a des Klemmelements 13 segmentierte, federelastische Ränder 13b auf. Hierzu sind die kreisrunden Ränder 13b der Durchgangsöffnungen 13a des Klemmelements 13 in ihrer Umfangsrichtung drei Mal gleich und gleichmäßig zueinander beabstandet, d.h. alle 120°, mit radialen Einschnitten 13c versehen, so dass die Ränder 13b der Durchgangsöffnungen 13a des Klemmelements 13 in drei gleiche bewegliche, federelastische Lamellen 13c von etwas weniger als 120° Erstreckung in der Umfangsrichtung unterteilt werden. Um dabei zugunsten der Beweglichkeit der Lamellen 13c das Maß der Materialunterbrechung des Federstahls des Klemmelements 13 zu erhöhen, schließen sich T-förmige Hinterschnitte 13d an die radialen Einschnitte 13c an, vgl. Figur 4.

Die beweglichen, federelastischen Lamellen 13b des Klemmelements 13 bzw. dessen Durchgangsöffnungen 13a sind in der vertikalen Richtung Z nach oben hochgebogen, d.h. zum ersten, oberen Führungselement 12 hin gebogen. Die Lamellen 13b sind dabei derart auf die Stiftsegmente 11 bzw. deren Führungsabschnitte 11c abgestimmt, dass in der ersten, losen Positionierung der Führungselemente 12, 14 gegenüber dem Klemmelement 13 lediglich ein haltender Kontakt zwischen den Innenkanten der Lamellen 13b der Durchgangsöffnungen 13a des Klemmelements 13 zu den Außenflächen der Stiftsegmente 11 vorliegt, um das Eigengewicht der Stiftsegmente 11 in der vertikalen Richtung Z zu halten. Diese Haltekraft kann, wie anhand des ersten Ausführungsbeispiels bereits beschrieben, in der vertikalen Richtung Z von unten durch das Positioniermittel der Einstellvorrichtung und von oben durch die Hand der Person leicht überwunden werden, um die Positionierung der Stiftsegmente 11 in der vertikalen Richtung Z zu verändern. Dass die Lamellen 13b dabei in der vertikalen Richtung Z nach oben hochgebogen sind, kann das Drücken bzw. Bewegen in der vertikalen Richtung Z nach oben erleichern und das Ausüben der Haltekraft entgegen der in der vertikalen Richtung Z nach unten gerichteten Gewichtskraft der Stiftsegmente 11 begünstigen.

Ist die gewünschte Positionierung der Stiftsegmente 11 erreicht, so kann das Verklemmen bzw. das Verspannen der Stiftsegmente 11 zur Fixierung der Positionierungen der Stiftsegmente 11 und damit der gewünschten Formoberfläche 10 der Form 1 erfolgen. Wie anhand des ersten Ausführungsbeispiels bereits beschrieben, wird hierzu das Klemmelement 13 in der zweiten, geschlossenen Positionierung zwischen den beiden Führungselementen 12, 14 zusammengedrückt bzw. zusammengepresst. Hierbei werden die hochgebogenen Lamellen 13b von der Unterseite des ersten, oberen Führungselements 12 im Wesentlichen in der vertikalen Richtung Z in die horizontale Ebene des Klemmelements 13 heruntergedrückt und hierdurch gleichzeitig auch radial an die Außenflächen der Führungsabschnitte 11c der Stiftsegmente 11 angedrückt bzw. angepresst, wodurch eine hohe klemmende Wirkung auf einfache Art und Weise erreicht und sicher gehalten werden kann.

### BEZUGSZEICHENLISTE (Teil der Beschreibung)

- X: Längsrichtung; Tiefe; Länge
- Y: Querrichtung; Breite
- Z: vertikale Richtung; Höhe
- X, Y: Horizontale; horizontale Ebene

- 1: Form; Formwerkzeug; Werkzeug
- 10: Formoberfläche; segmentierte Oberfläche
- 11: Stiftsegmenten; Formelemente; Stifte; Modellierungssemente
- 11a: Endabschnitt der Stiftsegmente 11
- 11b: Stirn- bzw. Außenseite der Stiftsegmente 11
- 11c: Führungsabschnitt der Stiftsegmente 11
- 11d: Rück- bzw. Drückseiten der Stiftsegmente 11
- 12: erstes, oberes Führungselement; erste, obere Führungsplatte; erstes, oberes Presselement
- 12a: Durchgangsöffnungen des ersten, oberen Führungselements 12
- 13: Klemmelement; Federstahlplatte; Spannelement
- 13a: Durchgangsöffnungen des Klemmelements 13
- 13b: segmentierte, federelastische Ränder der Durchgangsöffnungen 13a des Klemmelements 13; bewegliche, federelastische Lamellen des Klemmelements 13
- 13c: radiale Einschnitte des Klemmelements 13
- 13d: Hinterschnitte der biegsamen Lamellen 13b des Klemmelements 13
- 14: zweites, unteres Führungselement; zweite, untere Führungsplatte; zweites, unteres Presselement
- 14a: Durchgangsöffnungen des zweiten, unteren Führungselements 12

## Patentansprüche

1. Form (1) zum flexiblen Ausbilden einer Formoberfläche (10)
mit einer Mehrzahl von Stiftsegmenten (11) mit jeweils einer Stirnseite (11b), welche gemeinsam die Formoberfläche (10) bilden,
mit einem ersten Führungselement (12) mit einer Mehrzahl von Durchgangsöffnungen (12a) und
mit einem Klemmelement (13) mit einer Mehrzahl von Durchgangsöffnungen (13a),
wobei die Stiftsegmente (11) entlang ihrer länglichen Erstreckungsrichtung durch die Durchgangsöffnungen (12a) des ersten Führungselements (12) und durch die Durchgangsöffnungen (13a) des Klemmelements (13) linear und parallel zueinander beweglich verlaufen,
wobei das erste Führungselement (12) und das Klemmelement (13) entlang der Stiftsegmente (11) gegenüber einander beweglich sind und
wobei die Ränder (13b) der Durchgangsöffnungen (13a) des Klemmelements (13) zumindest abschnittsweise federelastisch biegsam ausgebildet und von der Ebene des Klemmelements (13) weggebogen sind, um vom ersten Führungselement (12) klemmend gegen die Stiftsegmente (11) gedrückt zu werden.

2. Form (1) nach Anspruch 1,
wobei die Ränder (13b) der Durchgangsöffnungen (13a) des Klemmelements (13) den Stirnseiten (11b) der Stiftsegmente (11) zugewandt von der Ebene des Klemmelements (13) weggebogen sind.

3. Form (1) nach Anspruch 1 oder 2,
wobei das erste Führungselement (12) entlang der Stiftsegmente (11) zwischen den Stirnseiten (11b) der Stiftsegmente (11) und dem Klemmelement (13) angeordnet ist.

4. Form (1) nach einem der vorangehenden Ansprüche,
wobei die Ränder (13b) der Durchgangsöffnungen (13a) des Klemmelements (13) sich auch in Kontakt mit den Stiftsegmenten (11) befinden, wenn die Ränder (13b) der Durchgangsöffnungen (13a) des Klemmelements (13) vom ersten Führungselement (12) nicht gegen die Stiftsegmente (11) gedrückt werden.

5. Form (1) nach einem der vorangehenden Ansprüche,
wobei das erste Führungselement (12) und das Klemmelement (13) entlang der Stiftsegmente (11) derart gegenüber einander beweglich ausgebildet sind, so dass
in einer ersten Positionierung das erste Führungselement (12) gegenüber den Ränder (13b) der Durchgangsöffnungen (13a) des Klemmelements (13) beanstandet ist und
in einer zweiten Positionierung das erste Führungselement (12) die Ränder (13b) der Durchgangsöffnungen (13a) des Klemmelements (13) gegen die Stiftsegmente (11) drückt.

6. Form (1) nach einem der vorangehenden Ansprüche,
wobei die Ränder (13b) der Durchgangsöffnungen (13a) des Klemmelements (13) von radialen Einschnitten (13c) in biegsame Lamellen (13b) des Klemmelements (13) unterteilt werden.

7. Form (1) nach Anspruch 6,
wobei wenigstens drei, vorzugsweise gleichmäßig zueinander beabstandete, radiale Einschnitte (13c) ausgebildet sind.

8. Form (1) nach Anspruch 6 oder 7,
wobei sich den radialen Einschnitten (13c) abschnittsweise Hinterschnitte (13d) der biegsamen Lamellen (13b) des Klemmelements (13) anschließen.

9. Form (1) nach Anspruch 8,
wobei die radialen Einschnitte (13c) zusammen mit den Hinterschnitten (13d) T-förmig ausgebildet sind.

10. Form (1) nach einem der vorangehenden Ansprüche,
wobei die Stiftsegmente (11) vom ersten Führungselement (12) lose geführt werden.

11. Form (1) nach einem der vorangehenden Ansprüche,
mit einem zweiten Führungselement (14) mit einer Mehrzahl von Durchgangsöffnungen (14a),
wobei die Stiftsegmente (11) entlang ihrer länglichen Erstreckungsrichtung auch durch die Durchgangsöffnungen (14a) des zweiten Führungselements (14) linear und parallel zueinander beweglich verlaufen,
wobei das Klemmelement (13) zwischen dem ersten Führungselement (12) und dem zweiten Führungselement (14) angeordnet ist,
wobei das zweite Führungselement (14) und das Klemmelement (13) entlang der Stiftsegmente (11) gegenüber einander beweglich sind und
wobei das zweite Führungselement (14) ausgebildet ist, das Klemmelement (13) abzustützen, wenn die Ränder (13b) der Durchgangsöffnungen (13a) des Klemmelements (13) vom ersten Führungselement (12) gegen die Stiftsegmente (11) gedrückt werden.

12. Form (1) nach Anspruch 11,
wobei das erste Führungselement (12), das Klemmelement (13) und das zweite Führungselement (14) entlang der Stiftsegmente (11) derart gegenüber einander beweglich ausgebildet sind, so dass
in einer ersten Positionierung das erste Führungselement (12) gegenüber den Ränder (13b) der Durchgangsöffnungen (13a) des Klemmelements (13) und das zweite Führungselement (14) gegenüber dem Klemmelement (13) beanstandet sind und
in einer zweiten Positionierung das erste Führungselement (12) die Ränder (13b) der Durchgangsöffnungen (13a) des Klemmelements (13) gegen die Stiftsegmente (11) und das zweite Führungselement (14) gegen das Klemmelement (13) drückt.

13. Form (1) nach Anspruch 11 oder 12,
wobei das zweite Führungselement (14) entlang der Stiftsegmente (11) den Stirnseiten (11b) der Stiftsegmente (11) abgewandt gegenüber dem Klemmelement (13) angeordnet ist.

14. Form (1) nach einem der Ansprüche 11 bis 13,
wobei die Stiftsegmente (11) vom zweiten Führungselement (14) lose geführt werden.

15. Form (1) nach einem der vorangehenden Ansprüche,
wobei die Stiftsegmente (11) entlang ihrer länglichen Erstreckungsrichtung jeweils einen Endabschnitt (11a) mit der jeweiligen Stirnseite (11b) und einen Führungsabschnitt (11c) aufweisen,
wobei die Führungsabschnitte (11c) jeweils durch die Durchgangsöffnungen (12a) des ersten Führungselements (12) und durch die Durchgangsöffnungen (13a) des Klemmelements (13), vorzugsweise und durch die Durchgangsöffnungen (14a) des zweiten Führungselements (14), verlaufen und
wobei die Endabschnitte (11a) quer zur länglichen Erstreckungsrichtung der Stiftsegmente (11) größer als die Durchgangsöffnungen (12a) des ersten Führungselements (12) und/oder die Durchgangsöffnungen (13a) des Klemmelements (13), vorzugsweise und/oder die Durchgangsöffnungen (14a) des zweiten Führungselements (14), ausgebildet sind.

## Claims

1. Mold (1) for flexibly forming a mold surface (10)
comprising a plurality of pin segments (11) each having an end face (11b), which together form the mold surface (10),
comprising a first guide element (12) having a plurality of through-openings (12a) and
comprising a clamping element (13) having a plurality of through-openings (13a),
wherein the pin segments (11) extend linearly and movably in parallel with one another along their longitudinal extension direction through the through-openings (12a) of the first guide element (12) and through the through-openings (13a) of the clamping element (13),
wherein the first guide element (12) and the clamping element (13) are movable relative to one another along the pin segments (11) and
wherein the edges (13b) of the through-openings (13a) of the clamping element (13) are designed to be resiliently flexible at least in portions and are bent away from the plane of the clamping element (13) in order to be pressed against the pin segments (11) by the first guide element (12) in a clamping manner.

2. Mold (1) according to claim 1,
wherein the edges (13b) of the through-openings (13a) of the clamping element (13), facing the end faces (11b) of the pin segments (11), are bent away from the plane of the clamping element (13).

3. Mold (1) according to either claim 1 or claim 2,
wherein the first guide element (12) is arranged along the pin segments (11) between the end faces (11b) of the pin segments (11) and the clamping element (13).

4. Mold (1) according to any of the preceding claims,
wherein the edges (13b) of the through-openings (13a) of the clamping element (13) are also in contact with the pin segments (11) when the edges (13b) of the through-openings (13a) of the clamping element (13) are not pressed against the pin segments (11) by the first guide element (12).

5. Mold (1) according to any of the preceding claims,
wherein the first guide element (12) and the clamping element (13) are designed to be movable relative to one another along the pin segments (11) such that
in a first positioning, the first guide element (12) is spaced from the edges (13b) of the through-openings (13a) of the clamping element (13) and
in a second positioning, the first guide element (12) presses the edges (13b) of the through-openings (13a) of the clamping element (13) against the pin segments (11).

6. Mold (1) according to any of the preceding claims,
wherein the edges (13b) of the through-openings (13a) of the clamping element (13) are divided by radial incisions (13c) into flexible lamellae (13b) of the clamping element (13).

7. Mold (1) according to claim 6,
wherein at least three, preferably evenly spaced, radial incisions (13c) are formed.

8. Mold (1) according to either claim 6 or claim 7,
wherein the radial incisions (13c) are adjoined in portions by undercuts (13d) of the flexible lamellae (13b) of the clamping element (13).

9. Mold (1) according to claim 8,
wherein the radial incisions (13c) together with the undercuts (13d) are T-shaped.

10. Mold (1) according to any of the preceding claims,
wherein the pin segments (11) are loosely guided by the first guide element (12).

11. Mold (1) according to any of the preceding claims,
comprising a second guide element (14) having a plurality of through-openings (14a),
wherein the pin segments (11) also extend linearly and movably in parallel with one another along their longitudinal extension direction through the through-openings (14a) of the second guide element (14),
wherein the clamping element (13) is arranged between the first guide element (12) and the second guide element (14),
wherein the second guide element (14) and the clamping element (13) are movable relative to one another along the pin segments (11) and
wherein the second guide element (14) is designed to support the clamping element (13) when the edges (13b) of the through-openings (13a) of the clamping element (13) are pressed against the pin segments (11) by the first guide element (12).

12. Mold (1) according to claim 11,
wherein the first guide element (12), the clamping element (13) and the second guide element (14) are designed to be movable relative to one another along the pin segments (11) such that
in a first positioning, the first guide element (12) is spaced from the edges (13b) of the through-openings (13a) of the clamping element (13) and the second guide element (14) is spaced from the clamping element (13) and
in a second positioning, the first guide element (12) presses the edges (13b) of the through-openings (13a) of the clamping element (13) against the pin segments (11) and the second guide element (14) against the clamping element (13).

13. Mold (1) according to either claim 11 or claim 12,
wherein the second guide element (14) is arranged along the pin segments (11), facing away from the end faces (11b) of the pin segments (11), relative to the clamping element (13).

14. Mold (1) according to any of claims 11 to 13,
wherein the pin segments (11) are loosely guided by the second guide element (14).

15. Mold (1) according to any of the preceding claims,
wherein the pin segments (11) each have an end portion (11a) together with the relevant end face (11b) and a guide portion (11c) along their longitudinal extension direction,
wherein the guide portions (11c) each extend through the through-openings (12a) of the first guide element (12) and through the through-openings (13a) of the clamping element (13), preferably and through the through-openings (14a) of the second guide element (14), and
wherein the end portions (11a) transverse to the longitudinal extension direction of the pin segments (11) are larger than the through-openings (12a) of the first guide element (12) and/or the through-openings (13a) of the clamping element (13), preferably and/or the through-openings (14a) of the second guide element (14).

## Revendications

1. Moule (1) pour la réalisation de manière flexible d'une surface de moule (10)
comportant une pluralité de segments formant broches (11) comportant respectivement une face frontale (11b), lesquels forment ensemble la surface de moule (10),
comportant un premier élément de guidage (12) comportant une pluralité d'ouvertures de passage (12a) et
comportant un élément de serrage (13) comportant une pluralité d'ouvertures de passage (13a),
dans lequel les segments formant broches (11) s'étendent le long de leur direction d'extension longitudinale à travers les ouvertures de passage (12a) du premier élément de guidage (12) et à travers les ouvertures de passage (13a) de l'élément de serrage (13) de manière à pouvoir se déplacer linéairement et parallèlement les uns par rapport aux autres,
dans lequel le premier élément de guidage (12) et l'élément de serrage (13) peuvent se déplacer l'un par rapport à l'autre le long des segments formant broches (11) et
dans lequel les bords (13b) des ouvertures de passage (13a) de l'élément de serrage (13) sont réalisés de manière à pouvoir être flexibles élastiquement au moins dans certaines sections et sont pliés à l'écart du plan de l'élément de serrage (13) afin d'être pressés contre les segments formant broches (11) par le premier élément de guidage (12) par serrage.

2. Moule (1) selon la revendication 1,
dans lequel les bords (13b) des ouvertures de passage (13a) de l'élément de serrage (13) sont pliés à l'écart du plan de l'élément de serrage (13), en face des faces frontales (11b) des segments formant broches (11).

3. Moule (1) selon la revendication 1 ou 2,
dans lequel le premier élément de guidage (12) est disposé le long des segments formant broches (11), entre les faces frontales (11b) des segments formant broches (11) et l'élément de serrage (13).

4. Moule (1) selon l'une des revendications précédentes,
dans lequel les bords (13b) des ouvertures de passage (13a) de l'élément de serrage (13) sont également en contact avec les segments formant broches (11) lorsque les bords (13b) des ouvertures de passage (13a) de l'élément de serrage (13) ne sont pas pressés contre les segments formant broches (11) par le premier élément de guidage (12).

5. Moule (1) selon l'une des revendications précédentes,
dans lequel le premier élément de guidage (12) et l'élément de serrage (13) sont réalisés de manière à pouvoir se déplacer l'un par rapport à l'autre le long des segments formant broches (11) de telle sorte que
dans un premier positionnement, le premier élément de guidage (12) est espacé par rapport aux bords (13b) des ouvertures de passage (13a) de l'élément de serrage (13), et
dans un second positionnement, le premier élément de guidage (12) presse les bords (13b) des ouvertures de passage (13a) de l'élément de serrage (13) contre les segments formant broches (11).

6. Moule (1) selon l'une des revendications précédentes,
dans lequel les bords (13b) des ouvertures de passage (13a) de l'élément de serrage (13) sont divisés par des entailles radiales (13c) en lamelles flexibles (13b) de l'élément de serrage (13).

7. Moule (1) selon la revendication 6,
dans lequel au moins trois entailles radiales (13c), de préférence régulièrement espacées les unes des autres, sont réalisées.

8. Moule (1) selon la revendication 6 ou 7,
dans lequel les entailles radiales (13c) rejoignent dans certaines sections des contre-dépouilles (13d) des lamelles flexibles (13b) de l'élément de serrage (13).

9. Moule (1) selon la revendication 8,
dans lequel les entailles radiales (13c) sont réalisées en forme de T conjointement avec les contre-dépouilles (13d).

10. Moule (1) selon l'une des revendications précédentes,
dans lequel les segments formant broches (11) sont guidés de manière lâche par le premier élément de guidage (12).

11. Moule (1) selon l'une des revendications précédentes,
comportant un second élément de guidage (14) comportant une pluralité d'ouvertures de passage (14a),
dans lequel les segments formant broches (11) s'étendent le long de leur direction d'extension longitudinale également à travers les ouvertures de passage (14a) du second élément de guidage (14) de manière à pouvoir se déplacer linéairement et parallèlement les uns par rapport aux autres,
dans lequel l'élément de serrage (13) est disposé entre le premier élément de guidage (12) et le second élément de guidage (14),
dans lequel le second élément de guidage (14) et l'élément de serrage (13) peuvent se déplacer l'un par rapport à l'autre le long des segments formant broches (11) et
dans lequel le second élément de guidage (14) est réalisé pour supporter l'élément de serrage (13) lorsque les bords (13b) des ouvertures de passage (13a) de l'élément de serrage (13) sont pressés contre les segments formant broches (11) par le premier élément de guidage (12).

12. Moule (1) selon la revendication 11,
dans lequel le premier élément de guidage (12), l'élément de serrage (13) et le second élément de guidage (14) sont réalisés de manière à pouvoir se déplacer les uns par rapport aux autres le long des segments formant broches (11) de telle sorte que
dans un premier positionnement, le premier élément de guidage (12) est espacé par rapport aux bords (13b) des ouvertures de passage (13a) de l'élément de serrage (13) et le second élément de guidage (14) est espacé par rapport à l'élément de serrage (13), et
dans un second positionnement, le premier élément de guidage (12) presse les bords (13b) des ouvertures de passage (13a) de l'élément de serrage (13) contre les segments formant broches (11) et presse le second élément de guidage (14) contre l'élément de serrage (13).

13. Moule (1) selon la revendication 11 ou 12,
dans lequel le second élément de guidage (14) est disposé le long des segments formant broches (11) à l'opposé des faces frontales (11b) des segments formant broches (11) par rapport à l'élément de serrage (13).

14. Moule (1) selon l'une des revendications 11 à 13,
dans lequel les segments formant broches (11) sont guidés de manière lâche par le second élément de guidage (14).

15. Moule (1) selon l'une des revendications précédentes,
dans lequel les segments formant broches (11) présentent respectivement, le long de leur direction d'extension longitudinale, une section d'extrémité (11a) comportant la face frontale (11b) respective et une section de guidage (11c),
dans lequel les sections de guidage (11c) s'étendent respectivement à travers les ouvertures de passage (12a) du premier élément de guidage (12) et à travers les ouvertures de passage (13a) de l'élément de serrage (13), et de préférence à travers les ouvertures de passage (14a) du second élément de guidage (14), et
dans lequel les sections d'extrémité (11a) sont réalisées de manière à être plus grandes, transversalement à la direction d'extension longitudinale des segments formant broches (11), que les ouvertures de passage (12a) du premier élément de guidage (12) et/ou que les ouvertures de passage (13a) de l'élément de serrage (13), et/ou de préférence que les ouvertures de passage (14a) du second élément de guidage (14).
